# EUROPEAN PATENT APPLICATION

(11) **EP 4 138 222 A1**
(43) Date of publication of application: **22.02.2023**
(21) Application number: 20936822.4
(22) Date of filing: 30.11.2020
(51) Int. Cl.: H01R 12/55

(54) **WIRING TERMINAL AND TRANSMISSION DEVICE**

(30) Priority: 19.05.2020 CN 202010426742
(71) Applicant: Huawei Technologies Co., Ltd., Longgang District, Shenzhen, Guangdong 518129 (CN)
(72) Inventor: CHEN, Yangquan, Shenzhen, Guangdong 518129 (CN); YANG, Bo, Shenzhen, Guangdong 518129 (CN); YIN, Weiwei, Shenzhen, Guangdong 518129 (CN)
(74) Representative: Huawei European IPR
(86) International application number: PCT/CN2020/132726
(87) International publication number: WO 2021/232737

(57) **Abstract**

Embodiments of this application provide a wiring terminal and a transmission device, and relate to the field of communication device technologies. The wiring terminal includes a housing, an input terminal, and a plurality of output terminals. The housing has a fixed surface and a surface opposite to each other, and a first side surface, a second side surface, and a third side surface connected between the fixed surface and the surface. The first side surface and the second side surface are opposite to each other and are located on two sides of the third side surface. Distances between the first side surface and the second side surface gradually decrease in a direction from the fixed surface to the surface. The input terminal is mounted on the third side surface, and the plurality of output terminals are disposed on the first side surface and the second side surface. There are a plurality of output terminals on the first side surface and a plurality of output terminals on the second side surface. In addition, the plurality of output terminals on the first side surface and the plurality of output terminals on the second side surface all are arranged in the direction from the fixed surface to the surface. The wiring terminal can implement high-density arrangement of output terminals without having an excessive long length.

## Description

This application claims priority to Chinese Patent Application No. 202010426742.6, filed with the China National Intellectual Property Administration on May 19, 2020 and entitled "WIRING TERMINAL AND TRANSMISSION DEVICE", which is incorporated herein by reference in its entirety.

### TECHNICAL FIELD

This application relates to the field of communication device technologies, and in particular, to a wiring terminal and a transmission device.

### BACKGROUND

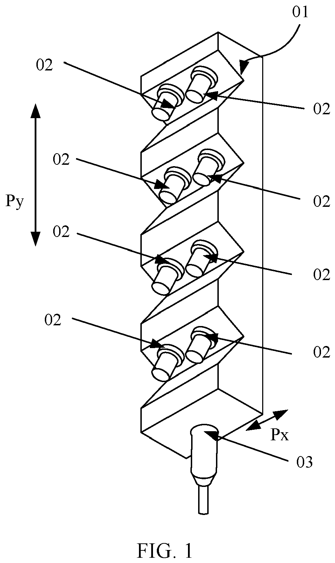

As an important structure in an optical transmission device, a wiring terminal is usually mounted on a support pole (referred to as pole-mounted). FIG. 1 shows an existing wiring terminal. The wiring terminal 01 has one input terminal 03 and a plurality of output terminals 02. Usually, a main optical cable is connected to the input terminal 03 of the wiring terminal 01, and a branched optical cable is connected to each output terminal 02 of the wiring terminal 01. The branched optical cable is connected to an indoor optical interface, and finally, an optical signal is connected to each user.

The wiring terminal shown in FIG. 1 is currently widely used. The plurality of output terminals 02 are disposed on a surface (the surface is a surface that is opposite to the support pole). The plurality of output terminals 02 are divided into a plurality of groups. Each group includes two output terminals, and the two output terminals are arranged in a direction Px in FIG. 1. In addition, the plurality of groups of output terminals 02 are arranged in a direction Py (namely, a length direction of the wiring terminal) in FIG. 1. Usually, there are a maximum of three output terminals arranged in the direction Px. If there is a large quantity of output terminals, a size of the wiring terminal in the direction Px needs to be increased correspondingly. Consequently, when the wiring terminal is pole-mounted, a part of the wiring terminal cannot be closely attached to the support pole, a windward area is increased, and stability of the wiring terminal mounted on the support pole is reduced.

With development of optical networks, more branched optical cables are needed. In this case, a quantity of output terminals disposed on one wiring terminal also increases. As a result, a wiring terminal with high-density output terminals is formed.

To implement high-density arrangement of output terminals, when the wiring terminal shown in FIG. 1 is used, a length of the wiring terminal is increased to increase the quantity of output terminals, so that the wiring terminal is long in length. Usually, space reserved for the wiring terminal on the support pole is limited. Therefore, when the length of the wiring terminal is long, it is difficult to mount the wiring terminal on the support pole.

### SUMMARY

This application provides a wiring terminal and a transmission device, and is mainly intended to provide a wiring terminal that can implement high-density arrangement of output terminals without having an excessive long length.

To achieve the foregoing objective, this application uses the following technical solutions.

According to a first aspect, this application provides a wiring terminal, including:
a housing, having a fixed surface and a surface that are opposite to each other, and a first side surface, a second side surface, and a third side surface that are connected between the fixed surface and the surface, where the first side surface and the second side surface are opposite to each other and are located on both sides of the third side surface, and distances between the first side surface and the second side surface gradually decrease in a direction from the fixed surface to the surface;
an input terminal, mounted on the third side surface; and
a plurality of output terminals, disposed on the first side surface and the second side surface, where there are a plurality of output terminals on the first side surface, there are a plurality of output terminals on the second side surface, and the plurality of output terminals on the first side surface and the plurality of output terminals on the second side surface are arranged in the direction from the fixed surface to the surface.

According to the wiring terminal provided in this application, the plurality of output terminals are disposed on the first side surface and second side surface of the housing that are opposite to each other (that is, the first side surface and the second side surface are used in this application to mount the plurality of output terminals). In addition, the plurality of output terminals on the first side surface and the plurality of output terminals on the second side surface are arranged in the direction from the fixed surface to the surface (namely, a thickness direction of the wiring terminal). Compared with a plurality of output terminals that are disposed on only the surface of the housing (that is, one surface is currently used to mount a plurality of output terminals) and are arranged in a length direction in the conventional technology, when a length of the wiring terminal is equal, a quantity of output terminals is significantly increased in this application. For example, when the length of the wiring terminal in this application is about 150 mm, there are eight output terminals, but when the length of the wiring terminal in the conventional technology is about 150 mm, there are a maximum of four output terminals. Therefore, when implementing high-density arrangement of output terminals, the wiring terminal in this application obviously decreases in length.

In addition, the distances between the first side surface and the second side surface gradually decrease in the direction from the fixed surface to the surface. Compared with a solution in which the distances between the first side surface and the second side surface are unchanged in the direction from the fixed surface to the surface, when a thickness of the wiring terminal is equal, the quantity of output terminals is also increased in this application, to implement high-density arrangement of output terminals.

In a possible implementation of the first aspect, the distances between the first side surface and the second side surface gradually decrease in a direction that is perpendicular to the third side surface and that is from away from the third side surface to close to the third side surface. An application scenario of the wiring terminal is usually pole mounting. The first side surface and the second side surface are disposed as follows: The distances between the first side surface and the second side surface gradually decrease in the direction that is perpendicular to the third side surface and that is from away from the third side surface to close to the third side surface. This facilitates an operator to connect a cable to an output terminal, to improve operability of the wiring terminal.

In a possible implementation of the first aspect, the first side surface and the second side surface are located on a first side of the third side surface, the input terminal is located on a second side of the third side surface, and the first side is opposite to the second side. That is, the first side surface and the second side surface, and the input terminal are located on two sides of the third side surface. For a case in which the first side surface and the second side surface, and the input terminal are located on a same side of the third side surface, although it is convenient for the operator to connect a cable, space in the housing is wasted correspondingly, and a structure of the entire wiring terminal is not compact enough.

In a possible implementation of the first aspect, there are a plurality of first side surfaces and a plurality of second side surfaces. The plurality of first side surfaces are arranged in parallel in a direction perpendicular to the third side surface. The plurality of second side surfaces are arranged in parallel in the direction perpendicular to the third side surface. The housing further includes a plurality of first connection surfaces and a plurality of second connection surfaces. The first side surface and the second side surface each have a first side and a second side opposite to each other, and a third side and a fourth side opposite to each other. The first side is connected to the surface, and the second side is connected to the fixed surface. The first connection surface is connected to a third side of one of two adjacent first side surfaces and a fourth side of the other first side surface. The second connection surface is connected to a third side of one of two adjacent second side surfaces and a fourth side of the other second side surface. The plurality of first side surfaces and the plurality of second side surfaces are disposed, and the first side surfaces and the second side surfaces are arranged in parallel in the direction perpendicular to the third side surface (namely, a length direction of the wiring terminal). In this way, the quantity of output terminals is increased. Compared with that of an existing wiring terminal in which a plurality of output terminals are disposed only on the surface of the housing, while high-density arrangement of output terminals is implemented, a size of the wiring terminal in the length direction is greatly reduced.

In a possible implementation of the first aspect, a distance between any first side surface and a second side surface opposite to the first side surface is equal. The distance between any first side surface and the second side surface opposite to the first side surface is equal, the first connection surface is connected to the third side of one of two adjacent first side surfaces and the fourth side of the other first side surface, and the second connection surface is connected to the third side of one of two adjacent second side surfaces and the fourth side of the other second side surface. Therefore, the plurality of first side surfaces and the plurality of first connection surfaces are in bent structures, and the plurality of second side surfaces and the plurality of second connection surfaces are in bent structures, so that the entire structure is more compact. Compared with another structure, a width of the wiring terminal is decreased, and a volume of the entire wiring terminal is miniaturized.

In a possible implementation of the first aspect, there are a plurality of first connection surfaces connected between two adjacent first side surfaces, and the plurality of first connection surfaces are in a stepped structure. There are a plurality of second connection surfaces connected between two adjacent second side surfaces, and the plurality of second connection surfaces are in a stepped structure. In two adjacent first side surfaces, the one close to the third side surface is a first front side surface, and the other one is a first rear side surface. An output terminal on the first rear side surface extends to a step surface of a first connection surface between the first front side surface and the first rear side surface. In two adjacent second side surfaces, the one close to the third side surface is a second front side surface, and the other one is a second rear side surface. An output terminal on the second rear side surface extends to a step surface of a second connection surface between the second front side surface and the second rear side surface. Stepped structures are formed between the plurality of first connection surfaces and between the plurality of second connection surfaces. An output terminal on the first rear side surface in adjacent first front side surface and first rear side surface extends to a step surface of a first connection surface between the first front side surface and the first rear side surface. Similarly, an output terminal on the second rear side surface in adjacent second front side surface and second rear side surface extends to a step surface of a second connection surface between the second front side surface and the second rear side surface. That is, the step surface reserves operation space for the operator. This facilitates the operator to connect cables to the output terminals of the first rear side surface and the second rear side surface, to improve operability of the entire wiring terminal.

In a possible implementation of the first aspect, the plurality of output terminals on the first side surface are arranged at intervals along a same straight line, and the plurality of output terminals on the second side surface are arranged at intervals along a same straight line. All output terminals on the first side surface are disposed in one straight line, and all output terminals on the second side surface are disposed in one straight line. In this way, there is space in up, down, left, and right directions of any output terminal. This facilitates mounting of a cable on the output terminal, to improve operability of the wiring terminal.

In a possible implementation of the first aspect, the plurality of output terminals on the first side surface and the plurality of output terminals on the second side surface are arranged symmetrically. The output terminals are symmetrically disposed on the first side surface and the second side surface. This can improve an appearance of the wiring terminal, and can correspondingly reduce a difficulty of a manufacturing process.

In a possible implementation of the first aspect, the surface of the housing is in a stepped structure in the direction perpendicular to the third side surface. When the output terminals arranged close to the surface in the length direction of the wiring terminal are respectively a first output terminal, a second output terminal, and a third output terminal, the second output terminal is located between the first output terminal and the third output terminal. By setting the surface of the housing into a stepped structure, spacings from the first output terminal, the second output terminal, and the third output terminal to the surface gradually decrease or gradually increase (that is, are unequal). In this way, when the operator mounts a cable on the output terminals, there is a large operation space. This facilitates operation, to improve operability of the entire wiring terminal.

In a possible implementation of the first aspect, the input terminal includes: a protruding portion, formed on the third side surface, where a channel through which an input cable passes is formed in the protruding portion; a buffer tube, disposed at an end of the protruding portion away from the third side surface, where a channel in the buffer tube is connected to the channel in the protruding portion, the buffer tube is made of an elastic material, and radial sizes of the buffer tube gradually decrease in a direction from close to the protruding portion to away from the protruding portion; and a compression tube, where a part is tubed on an outside of the protruding portion and an outside of the buffer tube, and the remaining part extends to an end of the buffer tube away from the protruding portion. Because strength of the cable mounted on the input terminal is low, the cable is protected after being passed through the channel by using the protruding portion with the channel. In addition, when the cable is bent, the buffer tube made of an elastic material can protect the cable from breaking, and connection reliability of the cable can be increased based on heat shrinkability of the compression tube.

In a possible implementation of the first aspect, a limiting structure is disposed at a location at which the protruding portion matches the compression tube. The limiting structure is configured to prevent the compression tube from separating from the protruding portion. The limiting structure is disposed to prevent the compression tube from slipping out of the protruding portion. This further improves connection strength between the input cable and the wiring terminal.

In a possible implementation of the first aspect, a plurality of limiting grooves arranged in an axial direction of the protruding portion are formed on an outer wall surface of the protruding portion. The limiting grooves are arranged in an axial direction of the protruding portion. A part of the compression tube is located in the plurality of limiting grooves to form the limiting structure. The plurality of limiting grooves are disposed on the protruding portion, to further increase friction between the compression tube and the protruding portion, and improve connection strength.

In a possible implementation of the first aspect, a glue filling hole is provided on the protruding portion. The glue filling hole is connected to the channel in the protruding portion. The glue filling hole is used to inject solidification glue into the channel, to fasten the input cable in the channel in the protruding portion.

In a possible implementation of the first aspect, an ear seat is further included, and the ear seat is provided with a mounting hole used to mount a connection piece.

According to a second aspect, this application further provides a transmission device, including the wiring terminal in any one of the first aspect or the implementations of the first aspect, and an input cable, where the input cable is connected to the input terminal of the wiring terminal.

In the transmission device provided in this application, the wiring terminal is the wiring terminal in any one of the implementations of the first aspect, and a plurality of output terminals are disposed on a first side surface and a second side surface opposite to each other. That is, compared with those in the conventional technology, the output terminals are mounted on two sides. Therefore, when the length of the wiring terminal is equal, the quantity of output terminals is significantly increased in this application, to implement high-density arrangement.

In a possible implementation of the second aspect, the transmission device further includes a plurality of output cables, and the plurality of output cables are connected to the plurality of output terminals in a one-to-one manner.

In a possible implementation of the second aspect, the input cables and the output cables are optical cables.

### BRIEF DESCRIPTION OF DRAWINGS

FIG. 1 is a schematic diagram of a structure of a wiring terminal in the conventional technology;
FIG. 2a is a schematic diagram of a structure of a wiring terminal according to an embodiment of this application;
FIG. 2b is another perspective view of FIG. 2a;
FIG. 3a is a diagram of a location relationship between a first side surface and a second side surface according to an embodiment of this application;
FIG. 3b is a diagram of a location relationship between a first side surface and a second side surface according to an embodiment of this application;
FIG. 4 is a schematic diagram of a structure of a wiring terminal according to an embodiment of this application;
FIG. 5 is a schematic diagram of a structure of a wiring terminal according to an embodiment of this application;
FIG. 6 is a schematic diagram of a structure of a wiring terminal according to an embodiment of this application;
FIG. 7a is a diagram of a location relationship between a plurality of first side surfaces and a plurality of second side surfaces according to an embodiment of this application;
FIG. 7b is a diagram of a location relationship between a plurality of first side surfaces and a plurality of second side surfaces according to an embodiment of this application;
FIG. 7c is a diagram of a location relationship between a plurality of first side surfaces and a plurality of second side surfaces according to an embodiment of this application;
FIG. 8 is a schematic diagram of a connection relationship between a plurality of first side surfaces and a plurality of first connection surfaces according to an embodiment of this application;
FIG. 9a is a schematic diagram of a structure of a wiring terminal according to an embodiment of this application;
FIG. 9b is an enlarged view of a part N in FIG. 9a;
FIG. 9c is another perspective view of FIG. 9a;
FIG. 9d is another perspective view of FIG. 9a; and
FIG. 10 is a schematic diagram of a connection relationship between an input terminal and an input cable according to an embodiment of this application.

### Reference signs:

01-wiring terminal; 02-output terminal; 03-input terminal; 1-housing; D-fixed surface; B-surface; A1-first side surface; A11-first front side surface; A12-first rear side surface; A2-second side surface; A3-third side surface; Q1-first connection surface; Q2-second connection surface; M1-first side; M2-second side; M3-third side; M4-fourth side; 11-protruding portion; 12-limiting groove; 2-input terminal; 3-output terminal; 4-compression tube; 5-buffer tube; and 6-input cable.

### DESCRIPTION OF EMBODIMENTS

Embodiments of this application relate to a wiring terminal and a transmission device. The following describes the wiring terminal and the transmission device in detail with reference to the accompanying drawings.

It should be noted that, the wiring terminal in this application may also be referred to as a junction box, a connection terminal box (Connection Terminal Box, CTB), a splitting and splicing closure (Splitting and Splicing Closure, SSC), a fiber access terminal (Fiber Access Terminal, FAT), or the like.

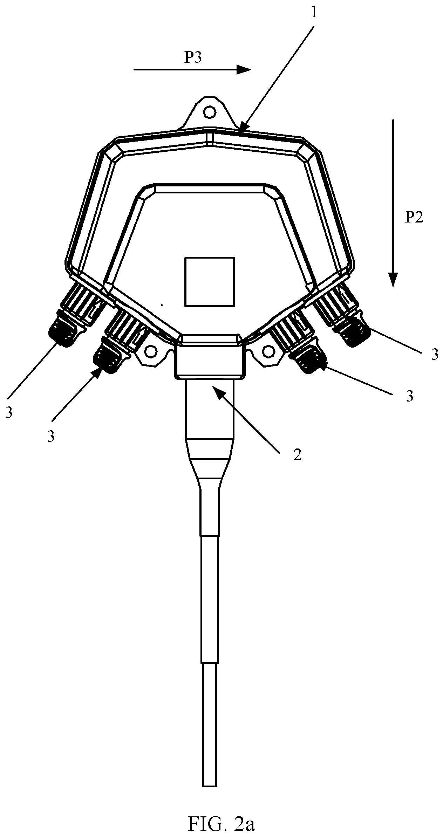

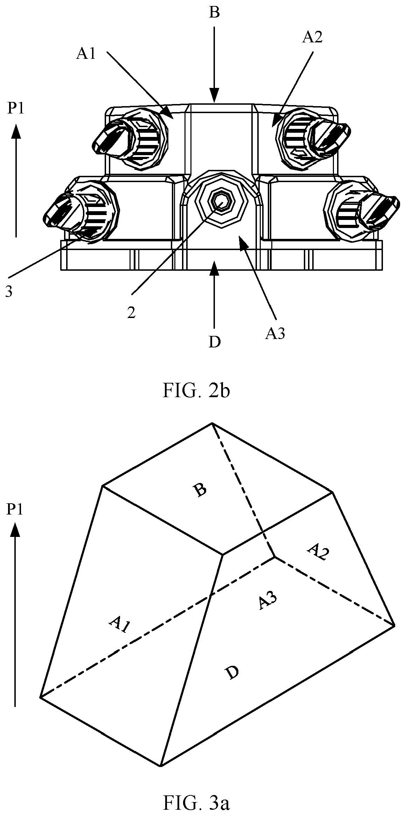

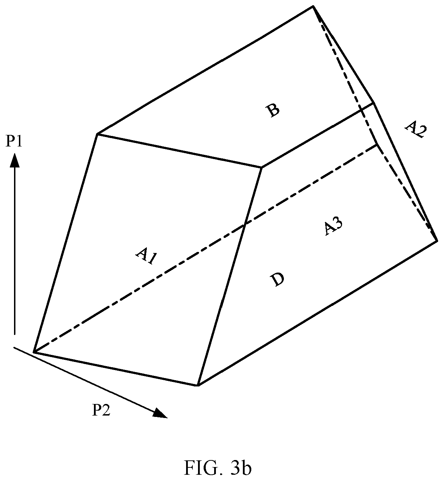

According to one aspect, an embodiment of this application provides a wiring terminal. With reference to FIG. 2a, the wiring terminal includes a housing 1, an input terminal 2, and a plurality of output terminals 3. With reference to FIG. 2b, the housing 1 has a fixed surface D and a surface B opposite to each other, and a first side surface A1, a second side surface A2, and a third side surface A3 connected between the fixed surface D and the surface B. With reference to FIG. 3a and FIG. 3b, the first side surface A1 and the second side surface A2 are opposite to each other and are located on two sides of the third side surface A3. Distances between the first side surface A1 and the second side surface A2 gradually decrease in a direction from the fixed surface D to the surface B. As shown in FIG. 2b, the input terminal 2 is mounted on the third side surface A3, and the plurality of output terminals 3 are disposed on the first side surface A1 and the second side surface A2. There are a plurality of output terminals on the first side surface A1 and a plurality of output terminals on the second side surface A2. In addition, the plurality of output terminals 3 on the first side surface A1 and the plurality of output terminals 3 on the first side surface A2 all are arranged in the direction from the fixed surface D to the surface B (a direction P1 in FIG. 2b, namely, a thickness direction of the wiring terminal).

That is, the plurality of output terminals provided in this application are disposed on the first side surface and the second side surface. Compared with that of existing ones disposed on only one surface (surface), a technical effect that can be achieved is: When a length of the wiring terminal (in a direction P2 shown in FIG. 2a) is equal, a quantity of output terminals is significantly increased in this application. This implements high-density arrangement of output terminals without increasing the length of the wiring terminal much.

In addition, the distances between the first side surface and the second side surface gradually decrease in the direction from the fixed surface to the surface. Compared with a solution in which distances between the first side surface and the second side surface are unchanged in the direction from the fixed surface to the surface, when a thickness (in the direction P1 shown in FIG. 2b) of the wiring terminal is equal, the first side surface and the second side surface have large areas. In this way, a quantity of arranged output terminals is correspondingly increased, to implement high-density arrangement.

It should be noted that, "the first side surface A1 and the second side surface A2 are opposite to each other" in "the first side surface A1 and the second side surface A2 are opposite to each other and are located on two sides of the third side surface A3" described in this application means that a vertical projection of the first side surface A1 on the second side surface A2 occupies at least a part of the second side surface A2.

In a specific implementation, the wiring terminal is usually fixed to a support pole, a wall, or another structure, and then an output cable is mounted on the output terminal. In addition, because there are many output terminals on one wiring terminal, there are many connected output cables. In this way, convenience of mounting the output cables by an operator is also an important indicator for determining performance of the wiring terminal.

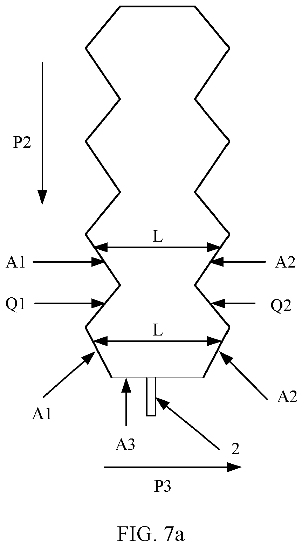

To improve use performance of the wiring terminal, with reference to FIG. 3b and FIG. 7a, the distances between the first side surface A1 and the second side surface A2 gradually decrease in a direction (a direction P2 shown in FIG. 3b and FIG. 7a) that is perpendicular to the third side surface A3 and that is from away from the third side surface A3 to close to the third side surface A3. In this way, compared with those in FIG. 3a, the first side surface A1 and the second side surface A2 are tilted towards an input terminal. Therefore, when mounting input cables, the operator can mount all input cables by standing near a location. This improves operability of the wiring terminal.

For that in the direction P2 shown in FIG. 3b and FIG. 7a, the distances between the first side surface A1 and the second side surface A2 gradually decrease, there are two different embodiments. The following separately describes the two embodiments.

### Embodiment 1

With reference to FIG. 7a, the first side surface A1 and the second side surface A2 are located on a first side of the third side surface A3, the output terminal is located on a second side of the third side surface, and the first side is opposite to the second side. That is, the first side surface and the second side surface, and the input terminal are located on two sides of the third side surface.

### Embodiment 2

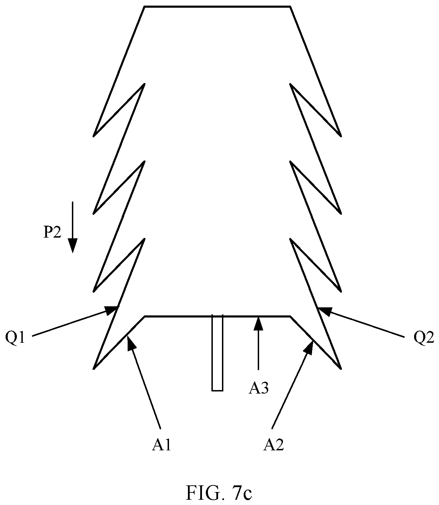

With reference to FIG. 7c, the first side surface A1 and the second side surface A2 are located on a second side of the third side surface A2, and the output terminal is located on the second side of the third side surface. That is, the first side surface, the second side surface, and the input terminal are located on a same side of the third side surface.

For both a structure shown in FIG. 7a and a structure shown in FIG. 7c, it is convenient for the operator to mount an output cable. However, it may be learned from FIG. 7c that, a dead region is formed between the first side surface A1 and a first connection surface Q1. During specific implementation, the region is difficult to be effectively used. In this way, space is wasted. Therefore, in this application, the structure shown in FIG. 7a is preferably used.

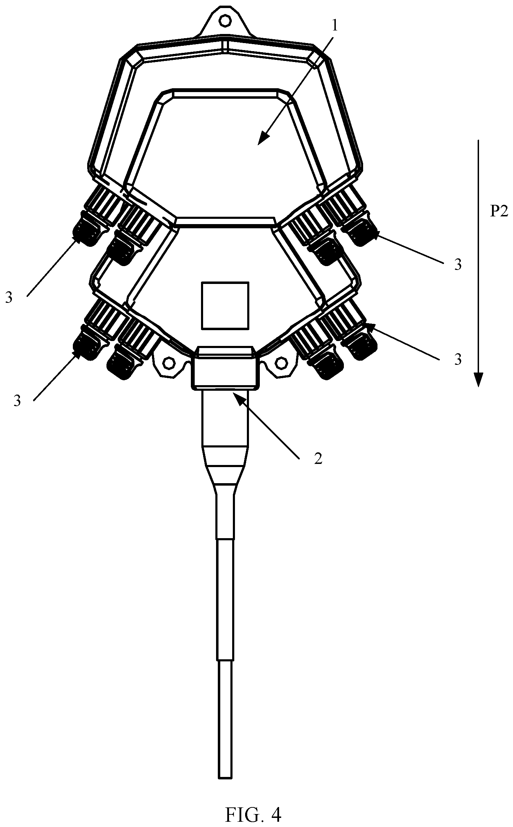

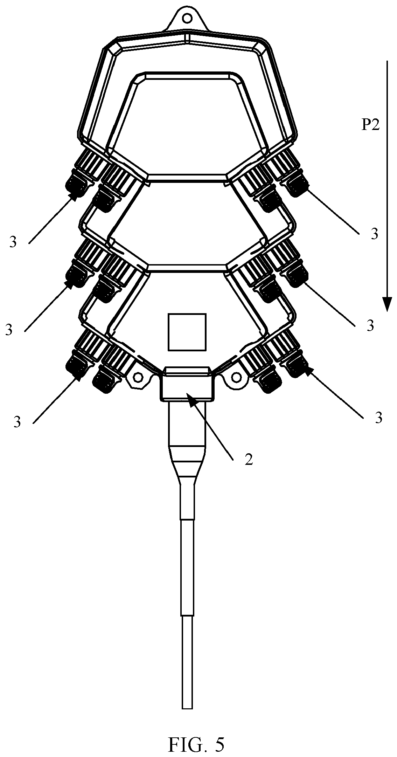

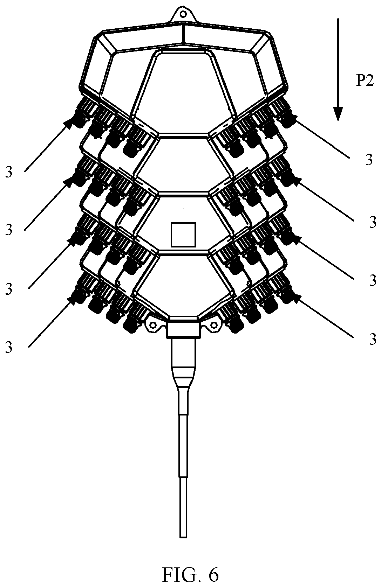

To further increase a quantity of output terminals, with reference to FIG. 4, FIG. 5, FIG. 6, and FIG. 7a, there are a plurality of first side surfaces A1 and a plurality of second side surfaces A2. The plurality of first side surfaces A1 are arranged in parallel in a direction perpendicular to the third side surface A3 (a direction P2 in FIG. 4). The plurality of second side surfaces A2 are arranged in parallel in the direction perpendicular to the third side surface A3 (the direction P2 in FIG. 4). In addition, the housing further includes a plurality of first connection surfaces Q1 and a plurality of second connection surfaces Q2. The first connection surface Q1 is configured to connect two adjacent first side surfaces A1, and the second connection surface Q2 is configured to connect two adjacent second side surfaces A2.

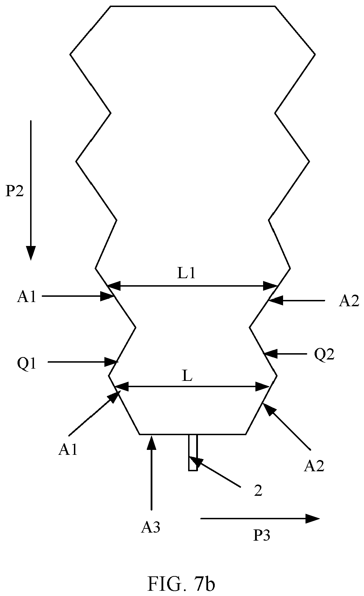

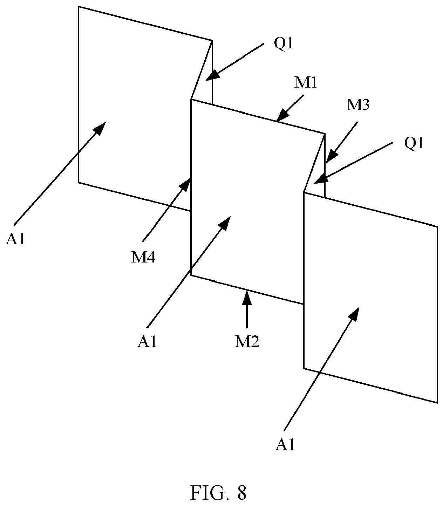

A specific structure in which the first connection surface Q1 is connected to two adjacent first side surfaces A1 is as follows: With reference to FIG. 8, the first side surface A1 has a first side M1 and a second side M2 opposite to each other, and a third side M3 and a fourth side M4 opposite to each other. The first side M1 is connected to the surface, the second side M2 is connected to the fixed surface, and the first connection surface Q1 is connected to the third side M3 of one of the two adjacent first side surfaces and the fourth side M4 of the other first side surface. In this way, the plurality of first side surfaces are connected to the plurality of first connection surfaces to form a bent structure shown in FIG. 7a and FIG. 7b.

Similarly, a specific structure in which the second connection surface Q2 is connected to two adjacent second side surfaces A2 is as follows: The second side surface A2 has a first side M1 and a second side M2 opposite to each other, and a third side M3 and a fourth side M4 opposite to each other. The first side M1 is connected to the surface, the second side M1 is connected to the fixed surface, and the second connection surface Q2 is connected to the third side M3 of one of the two adjacent second side surfaces and the fourth side M4 of the other second side surface. In this way, the plurality of second side surfaces are connected to the plurality of second connection surfaces to form a bent structure shown in FIG. 7a and FIG. 7b.

The plurality of first side surfaces and the plurality of second side surfaces are disposed in the direction P2 (namely, a length direction of the wiring terminal) to increase an arrangement area for the output terminals. In this way, a quantity of output terminals can be increased. Compared with that existing output terminals are arranged only on a surface of the housing in a length direction, a quantity of output terminals is greatly increased when a same length is ensured. For example, when a length of the wiring terminal in this application is 275 mm, a quantity of output terminals is 12; however, when a length of an existing wiring terminal is about 275 mm, a quantity of output terminals is about 6. When a length of the wiring terminal in this application is 340 mm, a quantity of output terminals is 16; however, when a length of an existing wiring terminal is about 340 mm, a quantity of output terminals is about 10. When a length of the wiring terminal in this application is 360 mm, a quantity of output terminals can be up to 32; however, when a length of an existing wiring terminal is about 360 mm, a quantity of output terminals is about 12. It may be learned from this that, according to the wiring terminal provided in this embodiment of this application, in addition to implementing high-density arrangement of output terminals, a length can be greatly shortened to meet a miniaturization design requirement.

An arrangement manner of the plurality of first side surfaces and the plurality of second side surfaces further includes the following two cases.

### Embodiment 1

With reference to FIG. 7a, a distance between any first side surface A1 and a second side surface A2 opposite to the first side surface A1 is equal.

That is, as shown in FIG. 7a, the distance between any first side surface A1 and a second side surface A2 opposite to the first side surface A1 is equal to L. A technical effect achieved by this design is that a size of the wiring terminal in a width direction (a direction P3 in FIG. 7a) is not increased due to the plurality of first side surfaces and the plurality of second side surfaces.

### Embodiment 2

With reference to FIG. 7b, distances between a first side surface A1 and a second side surface A2 opposite to the first side surface A1 gradually increase in a direction from close to the third side surface A3 to away from the third side surface A3.

That is, as shown in FIG. 7b, a distance between one of the first side surfaces A1 and a second side surface A2 opposite to the first side surface A1 is equal to L. However, a distance between another side surface A1 adjacent to the first side surface A1 and a second side surface A2 opposite to the first side surface A1 is equal to L1, where L1 is greater than L.

It can be learned from FIG. 7a and FIG. 7b that, a width of the wiring terminal shown in FIG. 7b is obviously greater than a width of the wiring terminal shown in FIG. 7a. To implement miniaturization of the wiring terminal, a structure shown in FIG. 7a is preferred.

In addition, the structure shown in FIG. 7a can further achieve the following technical effects: Usually, the wiring terminal is pole-mounted. A part of a structure shown in FIG. 7b may not attach a support pole. In this way, a windward area of the wiring terminal is increased, thereby reducing stability of the wiring terminal. However, compared with the structure shown in FIG. 7b, the structure shown in FIG. 7a has an effectively reduced windward area, and is with correspondingly improved stability.

When the first connection surface is connected to two adjacent first side surfaces, the first connection surface may be in a plurality of structures, which are described by using the following two embodiments.

### Embodiment 1

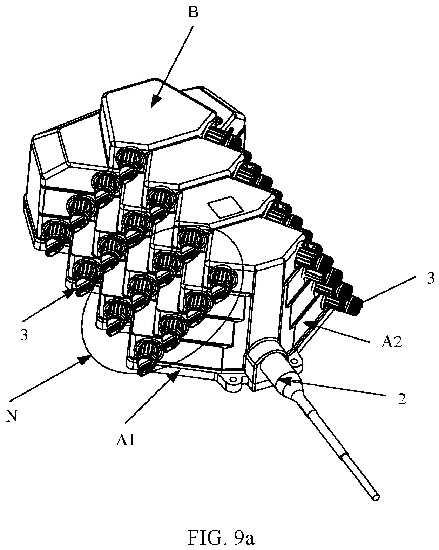

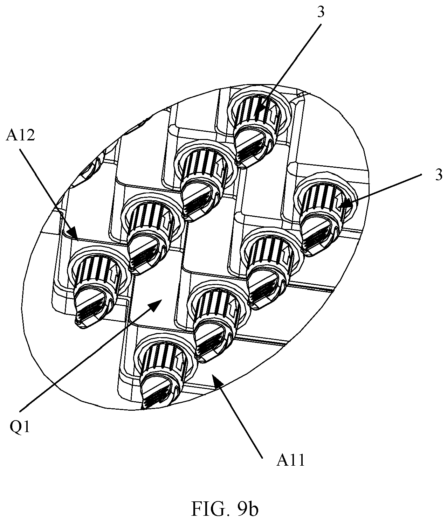

With reference to FIG. 9a and FIG. 9b, there are a plurality of first connection surfaces connected between two adjacent first side surfaces, and the plurality of first connection surfaces are in a stepped structure.

An advantage of this design is as follows: As shown in FIG. 9b, in two adjacent first side surfaces, the one close to the third side surface is a first front side surface A11, and the other one is a first rear side surface A12. An output terminal on the first rear side surface A12 extends to a step surface of a first connection surface between the first front side surface A11 and the first rear side surface A12. When mounting an input cable on the output terminal, the operator can use space above and below the step surface to facilitate an operation. This improves operability of the wiring terminal.

### Embodiment 2

There is one first connection surface connected between two adjacent first side surfaces, and the first connection surface is a plane.

By comparing the two embodiments, in this application, a structure shown in FIG. 9b is preferred. Certainly, the first connection surface connected between two adjacent first side surfaces may be alternatively in another structure.

When the second connection surface is connected to two adjacent second side surfaces, the second connection surface may be in a plurality of structures, which are described by using the following two embodiments.

### Embodiment 1

There are a plurality of second connection surfaces connected between two adjacent second side surfaces, and the plurality of second connection surfaces are in a stepped structure.

An advantage of this design is as follows: In two adjacent second side surfaces, the one close to the third side surface is a second front side surface, and the other one is a second rear side surface. An output terminal on the second rear side surface extends to a step surface of a second connection surface between the second front side surface and the second rear side surface. When mounting an input cable on the output terminal, the operator can use space above and below the step surface to facilitate an operation. This improves operability of the wiring terminal.

### Embodiment 2

There is one second connection surface connected between two adjacent second side surfaces, and the second connection surface is a plane.

By comparing the two embodiments, in this application, a structure in Embodiment 2 is preferred. Certainly, the second connection surface connected between two adjacent second side surfaces may be alternatively in another structure.

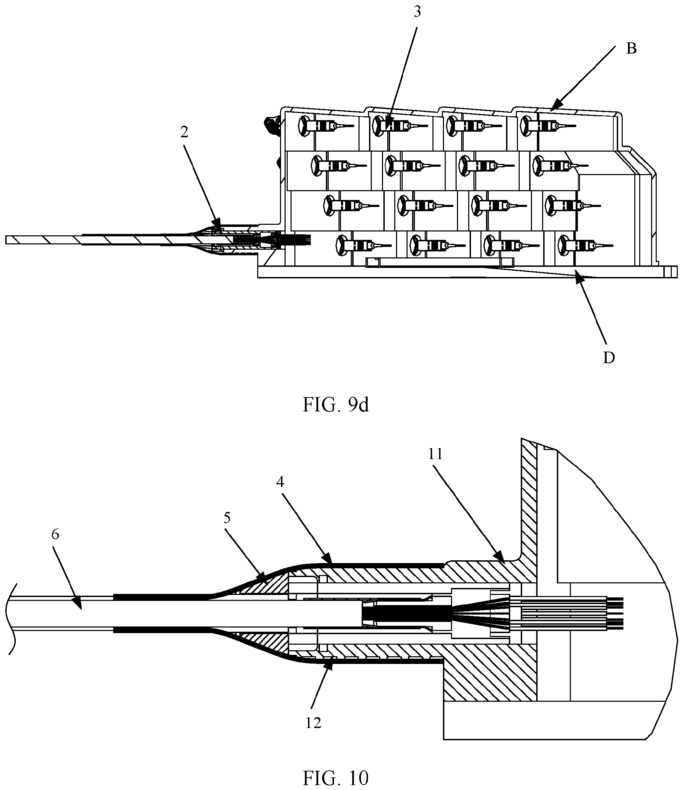

To further improve operability of the wiring terminal, with reference to FIG. 9a and FIG. 9d, the surface B of the housing is in a stepped structure in a direction perpendicular to the third side surface. That is, distances between the surface and output terminals that are close to the surface and that are on two adjacent first side surfaces are unequal. By comparing a solution in which distances between the surface and output terminals that are close to the surface and that are on the two adjacent first side surfaces are equal, a hand or a tool has a larger operating space during operation. This improves mounting efficiency of an output line.

For example, when the output terminals arranged close to the surface in the length direction of the wiring terminal are respectively a first output terminal, a second output terminal, and a third output terminal, the second output terminal is located between the first output terminal and the third output terminal. By setting the surface of the housing into a stepped structure, spacings from the first output terminal, the second output terminal, and the third output terminal to the surface gradually decrease or gradually increase (that is, are unequal). A peripheral space size of the first output terminal, a peripheral space size of the second output terminal, and a peripheral space size of the third output terminal are different. This facilitates operation by hand, to improve operability of the entire wiring terminal.

That the surface B of the housing is in a stepped structure may be as follows: In the direction from close to the third side surface to away from the third side surface, a spacing between the surface of the housing and the fixed surface gradually increases. Alternatively, in the direction from close to the third side surface to away from the third side surface, spacings between the surface of the housing and the fixed surface gradually decrease.

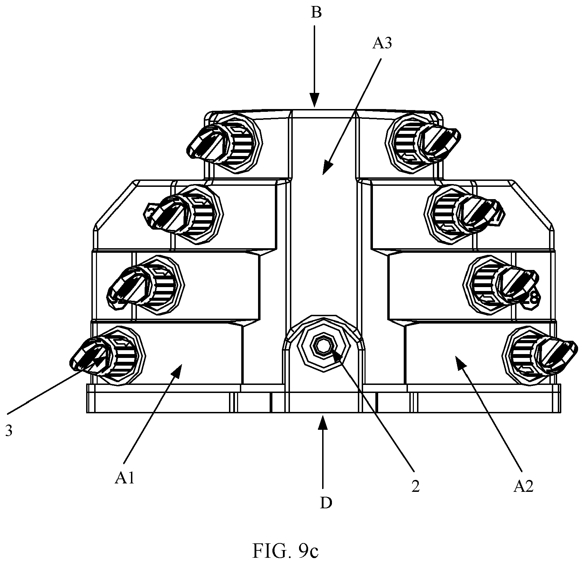

The plurality of output terminals on the first side surface have a plurality of arrangement manners. For example, as shown in FIG. 9c, the plurality of output terminals on the first side surface are arranged at intervals along a same straight line. In another example, the plurality of output terminals on the first side surface are arranged along a curve, for example, a bend line or an arc line.

The plurality of output terminals on the second side surface have a plurality of arrangement manners. For example, as shown in FIG. 9c, the plurality of output terminals on the second side surface are arranged at intervals along a same straight line. In another example, the plurality of output terminals on the second side surface are arranged along a curve, for example, a bend line or an arc line.

When the plurality of output terminals are arranged in a structure shown in FIG. 9c, there is space in up, down, left, and right directions of any output terminal. This facilitates mounting of an output cable on the output terminal, to improve operability of the wiring terminal.

To improve an appearance of the wiring terminal, the plurality of output terminals on the first side surface and the plurality of output terminals on the second side surface are arranged symmetrically. In addition, this can further reduce a difficulty of a manufacturing process.

A quantity of output terminals on the first side surface and a quantity of output terminals on the second side surface may be determined based on a design requirement. For example, with reference to FIG. 2b, there are two output terminals on each of the first side surface and the second side surface. In another example, with reference to FIG. 9c, there are four output terminals on each of the first side surface and the second side surface. Certainly, there may be another quantity. A quantity of output terminals on the first side surface and the second side surface is not limited in this application, and any quantity falls within the protection scope of this application.

A spacing between two adjacent output terminals on the first side surface is not limited either. Similarly, a spacing between two adjacent output terminals on the second side surface is also not limited either.

To improve connection strength between an input cable and the wiring terminal, with reference to FIG. 10, an input terminal includes a protruding portion 11, a buffer tube 5, and a compression tube 4. The protruding portion 11 is formed on the third side surface, and a channel through which the input cable passes is formed in the protruding portion 11. The buffer tube 5 is disposed at an end of the protruding portion 11 away from the third side surface. A channel in the buffer tube 5 is connected to the channel in the protruding portion 11. The buffer tube 5 is made of an elastic material, and radial sizes of the buffer tube 5 gradually decrease in a direction from close to the protruding portion 11 to away from the protruding portion 11. A part of the compression tube 4 is tubed on an outside of the protruding portion 11 and an outside of the buffer tube 5, and the remaining part extends to an end of the buffer tube 5 away from the protruding portion 11.

That is, the protruding portion with a channel is formed on the third side surface, to increase a contact area with the input cable, thereby improving connection strength between the input cable and the wiring terminal. In addition, the compression tube is disposed. During a specific implementation, a part of the compression tube is tubed on the outside of the protruding portion and the buffer tube, and a part is tubed on an outside of the input cable. In this way, connection strength between the input cable and the wiring terminal is increased.

Because the buffer tube made of an elastic material is used, when the input cable is bent, the buffer tube can serve as a buffer to protect the bent input cable, for example, especially an optical cable with a small strength.

The compression tube 4 may be a heat shrinkable tube, or may be a cold shrinkable tube.

To further increase connection strength between the compression tube and the wiring terminal, the wiring terminal further includes a limiting structure. The limiting structure is disposed at a location at which the protruding portion matches the compression tube. The limiting structure is configured to prevent the compression tube from separating from the protruding portion.

The limiting structure may be in a plurality of structures, which are described in the following by using two embodiments.

### Embodiment 1

With reference to FIG. 10, a plurality of limiting grooves 12 arranged in an axial direction of the protruding portion 11 are disposed on an outer wall surface of the protruding portion 11. The limiting grooves 12 are arranged in an axial direction of the protruding portion 11. A part of the compression tube 4 is located in the plurality of limiting grooves 12 to form the limiting structure.

By disposing the plurality of limiting grooves, the compression tube 4 has a large area to be embedded in the limiting grooves. This further increases friction between the compression tube and the protruding portion, and improves connection strength.

### Embodiment 2

A groove is formed on a surface that is of the compression tube 4 and that matches the protruding portion. A protruded block that can be inserted into the groove is formed on the protruding portion. The groove cooperates with the protruded block to form the limiting structure.

Certainly, the limiting structure may be alternatively in another structure, and any limiting structure falls within the protection scope of this application.

In some implementations, a glue filling hole is provided on the protruding portion 11. The glue filling hole is connected to the channel in the protruding portion 11. The glue filling hole is used to inject solidification glue into the channel. The input cable is fastened in the channel in the protruding portion by using the solidification glue. This improves connection strength between the input cable and the protruding portion.

Usually, the wiring terminal is mounted on the support pole or mounted on the wall, that is, the fixed surface is attached to the support pole or the wall.

The wiring terminal further includes an ear seat, and the ear seat is provided with a mounting hole. A connection piece is mounted in the mounting hole to fasten the wiring terminal.

According to another aspect, an embodiment of this application provides a transmission device, where the transmission device includes a wiring terminal and an input cable. The wiring terminal is the wiring terminal provided in the foregoing embodiments, and the input cable is mounted on an input terminal of the wiring terminal.

In the wiring terminal in the transmission device, surfaces for mounting output terminals include a first side surface and a second side surface. A plurality of output terminals are mounted on the first side surface and the second side surface. Compared with an existing plurality of output terminals mounted on only one surface, when a length of the wiring terminal is equal, a quantity of output terminals is significantly increased in this application. This implements high-density arrangement of output terminals.

In addition, distances between the first side surface and the second side surface gradually decrease in a direction from a fixed surface to a surface. Compared with a solution in which distances between the first side surface and the second side surface are unchanged in the direction from the fixed surface to the surface, when a thickness of the wiring terminal is equal, a quantity of output terminals is also increased in this application. This implements high-density arrangement of output terminals.

In some implementations, the transmission device further includes a plurality of output cables, and the plurality of output cables are connected to the plurality of output terminals in a one-to-one manner.

In the transmission device, the input cable and the output cable may be optical cables, or may be cables.

In the descriptions of this specification, specific features, structures, materials, or characteristics may be combined in a proper manner in any one or more of embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wiring terminal, comprising:
a housing, comprising a fixed surface and a surface that are opposite to each other, and a first side surface, a second side surface, and a third side surface that are connected between the fixed surface and the surface, wherein the first side surface and the second side surface are opposite to each other and are located on both sides of the third side surface, and distances between the first side surface and the second side surface gradually decrease in a direction from the fixed surface to the surface;
an input terminal, mounted on the third side surface; and
a plurality of output terminals, disposed on the first side surface and the second side surface, wherein there are a plurality of output terminals on the first side surface, there are a plurality of output terminals on the second side surface, and the plurality of output terminals on the first side surface and the plurality of output terminals on the second side surface are arranged in the direction from the fixed surface to the surface.

2. The wiring terminal according to claim 1, wherein the distances between the first side surface and the second side surface gradually decrease in a direction that is perpendicular to the third side surface and that is from away from the third side surface to close to the third side surface.

3. The wiring terminal according to claim 2, wherein the first side surface and the second side surface are located on a first side of the third side surface, the input terminal is located on a second side of the third side surface, and the first side is opposite to the second side.

4. The wiring terminal according to any one of claims 1 to 3, wherein there are a plurality of first side surfaces and a plurality of second side surfaces, the plurality of first side surfaces are arranged in parallel in a direction perpendicular to the third side surface, and the plurality of second side surfaces are arranged in parallel in the direction perpendicular to the third side surface;
the housing further comprises a plurality of first connection surfaces and a plurality of second connection surfaces; and
the first side surface and the second side surface each have a first side and a second side opposite to each other, and a third side and a fourth side opposite to each other, the first side is connected to the surface, the second side is connected to the fixed surface, the first connection surface is connected to a third side of one of two adjacent first side surfaces and a fourth side of the other first side surface, and the second connection surface is connected to a third side of one of two adjacent second side surfaces and a fourth side of the other second side surface.

5. The wiring terminal according to claim 4, wherein a distance between any first side surface and a second side surface opposite to the first side surface is equal.

6. The wiring terminal according to claim 4 or 5, wherein there are a plurality of first connection surfaces connected between two adjacent first side surfaces, the plurality of first connection surfaces are in a stepped structure, there are a plurality of second connection surfaces connected between two adjacent second side surfaces, and the plurality of second connection surfaces are in a stepped structure;
in two adjacent first side surfaces, the one close to the third side surface is a first front side surface, the other one is a first rear side surface, and an output terminal on the first rear side surface extends to a step surface of a first connection surface between the first front side surface and the first rear side surface; and
in two adjacent second side surfaces, the one close to the third side surface is a second front side surface, the other one is a second rear side surface, and an output terminal on the second rear side surface extends to a step surface of a second connection surface between the second front side surface and the second rear side surface.

7. The wiring terminal according to any one of claims 1 to 6, wherein the plurality of output terminals on the first side surface are arranged at intervals along a same straight line, and the plurality of output terminals on the second side surface are arranged at intervals along a same straight line.

8. The wiring terminal according to any one of claims 1 to 7, wherein the plurality of output terminals on the first side surface and the plurality of output terminals on the second side surface are arranged symmetrically.

9. The wiring terminal according to any one of claims 1 to 8, wherein the surface of the housing is in a stepped structure in the direction perpendicular to the third side surface.

10. The wiring terminal according to any one of claims 1 to 9, wherein the input terminal comprises:
a protruding portion, formed on the third side surface, wherein a channel through which an input cable passes is formed in the protruding portion;
a buffer tube, disposed at an end of the protruding portion away from the third side surface, wherein a channel in the buffer tube is connected to the channel in the protruding portion, the buffer tube is made of an elastic material, and radial sizes of the buffer tube gradually decrease in a direction from close to the protruding portion to away from the protruding portion; and
a compression tube, wherein a part is tubed on an outside of the protruding portion and an outside of the buffer tube, and the remaining part extends to an end of the buffer tube away from the protruding portion.

11. The wiring terminal according to claim 10, wherein a limiting structure is disposed at a location at which the protruding portion matches the compression tube, and the limiting structure is configured to prevent the compression tube from separating from the protruding portion.

12. The wiring terminal according to claim 11, wherein a plurality of limiting grooves arranged in an axial direction of the protruding portion are formed on an outer wall surface of the protruding portion, the limiting grooves are arranged in an axial direction of the protruding portion, and a part of the compression tube is located in the plurality of limiting grooves to form the limiting structure.

13. A transmission device, comprising:
the wiring terminal according to any one of claims 1 to 12; and
an input cable, wherein the input cable is connected to the input terminal of the wiring terminal.

14. The transmission device according to claim 13, further comprising:
a plurality of output cables, wherein the plurality of output cables are connected to the plurality of output terminals in a one-to-one manner.
